# EUROPEAN PATENT APPLICATION

(11) **EP 1 923 683 A1**
(43) Date of publication of application: **21.05.2008**
(21) Application number: 06797299.2
(22) Date of filing: 01.09.2006
(51) Int. Cl.: G01L 3/14

(54) **ROTATION DETECTOR AND TORQUE SENSOR**

(30) Priority: 07.09.2005 JP 2005258933
(71) Applicant: Yamaha Hatsudoki Kabushiki Kaisha, Iwata-shi, Shizuoka 438-8501 (JP)
(72) Inventor: HINO, Haruyoshi, Iwata-shi Shizuoka 438-8501 (JP); NAKAMURA, Kazuto, Iwata-shi Shizuoka 438-8501 (JP); MUROTA, Keiko, Iwata-shi Shizuoka 438-8501 (JP); SHIRAZAWA, Hideki, Iwata-shi Shizuoka 438-8501 (JP); TANAKA, Hiroshi, Iwata-shi Shizuoka 438-8501 (JP); WATANABE, Hisashi, Iwata-shi Shizuoka 438-8501 (JP)
(74) Representative: Grünecker, Kinkeldey, Stockmair & Schwanhäusser Anwaltssozietät
(86) International application number: PCT/JP2006/317357
(87) International publication number: WO 2007/029620

(57) **Abstract**

A first and a second rotary bodies are provided coaxially, with one body capable of rotating relatively to the other. A slider 33 is provided which is coaxially located with one of the rotary bodies, connected through a slide guide means 34 to the one rotary body and as a result restricted from rotating relatively to the one rotary body while its axial displacement is permitted. There are provided a movable-side magnet 32 secured coaxially to the slider 33, and a fixed-side magnet 31 secured coaxially to the other rotary body and restricted from axially moving. The movable-side magnet 32 and the fixed-side magnet 31 are magnetized so that the magnitude of the magnetic force axially working on both magnets changes corresponding to the rotary position of one magnet relative to the rotary position of the other magnet. A detecting means for detecting the magnitude of relative rotary displacement between the first and second rotary bodies is provided.

## Description

### Technical Field

This invention relates to a rotation detector and a torque sensor for detecting the amount of rotary displacement of a rotary body by converting the rotary displacement into axial displacement by magnetic forces of permanent magnets.

### [Background Art]

For example the motor-operated bicycle with its motor output varying according to the pedaling force of a rider is conventionally constituted to detect the magnitude of the pedaling force with a torque sensor. As the conventional torque sensors mounted on the motor-operated bicycle of the above type, there are ones disclosed for example in: JP-A 2006-35927, JP-A-2000-153795, JP-A-2000-114616, JP-A-2000-53069, and JP-A-H 10-250673 (hereinafter simply referred to as the Patent Documents 1, 2, 3, and 4, respectively).

The torque sensor disclosed in the Patent Document 1 comprises a first rotary body rotatable together with a pedal crankshaft and a second rotary body rotatable together with a chain sprocket for driving a rear wheel. The pedal crankshaft and the chain sprocket are located coaxially, constituted so that one is rotatable relatively to the other, and interconnected through a compression coil spring for power transmission.

Guide pins are planted in the first rotary body. A movable ring is attached to the first rotary body through the guide pins. The movable ring is formed in an cylindrical shape and supported with the guide pins on the first rotary body so as to be axially movable relatively to the first rotary body and rotatable about the axis together with the first rotary body. The movable ring is urged in the direction away from the first rotary body by means of springs fit to the guide pins. A cylindrically formed a stator is concentrically secured to the second rotary body and located within the inside round surface of the movable ring. A cam is formed on the inside round surface of the movable ring while a can follower is formed on the outside round surface of the stator so as to come into contact with the cam.

The cam is formed to extend while tilting from the front side to the rear side in the rotary direction as it heads from one axial end toward the other of the movable ring. In other words, the movable ring moves axially as the first rotary body rotates relatively to the second rotary body against the resilient force of the power transmitting compression coil spring. With this torque sensor, the position of the movable ring having moved axially is detected with the sensor and the magnitude of the pedaling force is calculated from the detected position.

The torque sensor disclosed in the Patent Document 2 comprises a first planetary gear mechanism on a pedal crankshaft side and a second planetary gear mechanism on a rear wheel driving chain sprocket side. The sun gear of the first planetary gear mechanism is provided on the pedal crankshaft, and the sun gear of the second planetary gear mechanism on the rotary shaft on the rear wheel driving chain sprocket side. These peripheral gears are interconnected. The planetary gear supporting carrier of the first planetary gear mechanism is secured on the vehicle body frame side, and the planetary gear supporting carrier of the second planetary gear mechanism is connected to the detecting gear. The detecting gear engages with the input gear of the rotation detecting sensor made of a potentiometer.

With the above torque sensor, the detecting gear rotates with the rotary phase difference between the pedal crankshaft and the rear wheel driving chain sprocket. With this torque sensor, the rotary angle of the detecting gear is detected with the rotation detecting sensor to calculate the magnitude of the pedaling force from the detected rotary angle.

The torque sensor disclosed in the Patent Document 3 employs a constitution comprising a magnetostrictor the rider's pedaling force is applied to, and a magnetostriction detecting coil provided around the magnetostrictor, to detect the change in the permeability of the magnetostrictor corresponding to the magnitude of the pedaling force.

The torque sensor disclosed in the Patent Documents 4 and 5 comprises a cylinder the pedal crankshaft passes through and a detecting coil the cylinder passes through. The cylinder is connected on its one end to the pedal crankshaft; and on the other end, to the chain sprocket side, and is constituted to be twisted according to the magnitude of the pedaling force.

The outside round surface of the cylinder is provided with a magnetic film having a large number of pairs of non-parallel slits as seen in the plan view (Paten Document 4) and with a large number of pairs of non-parallel raised strips (Patent Document 5) so that permeability changes when twisted. The detecting coil is constituted to detect the change in permeability occurring when slits and raised strips are twisted.

### [Disclosure of the Invention]

### [Problems to be Solved by the Invention]

The torque sensor described in the Patent Document 1 employs the constitution in which rotation is converted into axial displacement using a cam and a cam follower. Therefore, it has a problem that it cannot be downsized in radial dimension due to the reasons described below.
With this type of torque sensor, the ratio of the rotary angle to the axial displacement of the movable ring when the movable ring rotates relatively to the a stator is determined by the tilted angle of the cam relative to the circumferential direction (this tilted angle is hereinafter simply called the skew angle). This ratio must be set to an appropriate value so that the rider does not get unusual feeling and that the sensor can securely detect the displacement.

In other words, the greater the rotary angle is up to the time the compression coil spring is compressed and the rear wheel driving sprocket starts rotating after the rider depresses the pedal, the more the rider gets unusual feeling. Therefore, the rotary angle of the movable ring relative to the a stator is set as small as possible.
On the other hand, to detect the axial displacement amount of the first rotary body with high accuracy with a sensor, the displacement of the movable ring is set to be commensurate with the resolution of the sensor.

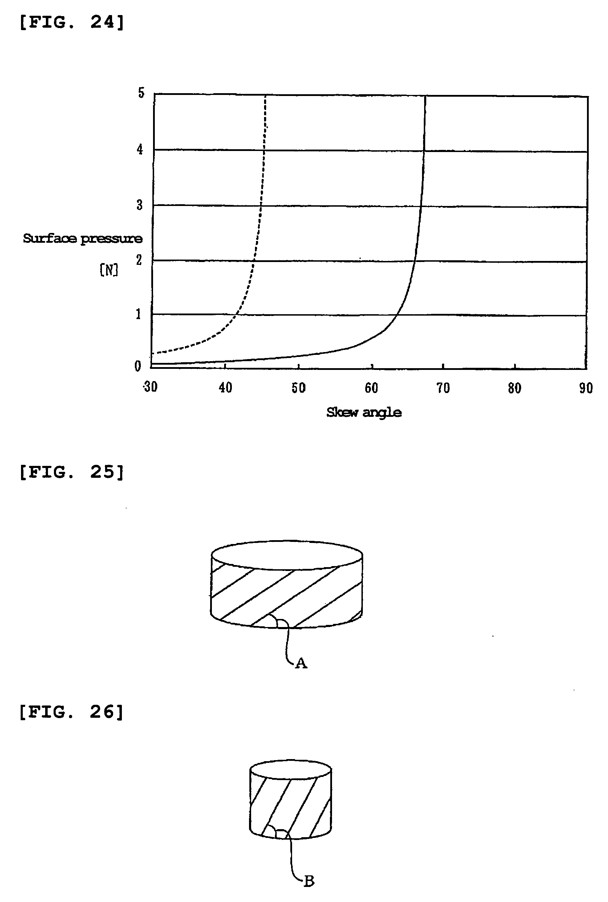

In order to reduce the diameters of both the movable ring and the a stator without changing the above-mentioned ratio, the skew angle of the cam must be increased as shown in FIG. 25 and FIG. 26. For example, if the rotary body having a relatively large diameter and a skew angle of A, as shown in FIG. 25 is changed to have a smaller diameter without changing the above-mentioned ratio, the skew angle increases to an angle B larger than the angle A as shown in FIG. 26.

When the skew angle increases, the surface pressure occurring as the cam is pressed on the cam follower becomes excessive, and frictional force increases to make operation less smooth, which not only impairs the essential function of the torque sensor but also lowers the durability of the torque sensor as its components wear off easily. In other words, the torque sensor described in the Patent Document 1 cannot be formed with a smaller diameter because the skew angle cannot be increased as described above.
For the reasons described above, employing the torque sensor described in the Patent Document 1 inevitably results in a large size of the torque sensor.

The torque sensor described in the Patent Document 2 has problems of complicated constitution and increased manufacturing cost because it employs a plural number of planetary gear mechanisms to detect rotary phase difference between the pedal crankshaft and the rear wheel driving chain sprocket.

The torque sensors described in the Patent Documents 3 to 5 have problems of increased electric power consumption and accordingly reduced cruising range because their coils must be constantly energized to detect the change in permeability.
The torque sensors described in the Patent Documents 3 to 5 have further problems: as they are used to detect very small change in permeability with small signal-to-noise ratio, they are liable to be affected by external magnetic noise and so they are not the ones that can always detect torque accurately.

As the shapes of the large number of slits and raised strips used for changing permeability are complicated, manufacture of the torque sensors described in the Patent Documents 4 and 5with a high yield is difficult. Moreover, the magnetic materials for forming these slits and raised strips in the torque sensors are relatively expensive. Therefore, the torque sensors described in the Patent Documents 4 and 5 have the problem of increased manufacturing cost.

This invention is made to solve the above problems. Therefore, the object of the invention is to provide a rotary sensor and a torque sensor that are compact in radial dimension and that make it possible to accurately detect the relative rotation between two components in a simple constitution.

### Means for Solving the Problems

To accomplish the above object, a rotation detector according to the invention includes: a first and a second rotary bodies located on a common axis with one rotary body rotatable relatively to the other, a slider located coaxially with one of the first and second rotary bodies with restricted rotation relative to the one rotary body and with permitted axial displacement as it is connected to the one rotary body through a slide guide means, a movable-side magnet fixed coaxially on the slider, and a fixed-side magnet fixed coaxially on the other rotary body with its axial displacement restricted, in which these movable-side magnet and fixed-side magnet are magnetized so that magnetic force axially working on both the magnets changes when the rotary position of one magnet relative to the rotary position of the other magnet changes, and further includes a detecting means for detecting the amount of rotary displacement between the first and second rotary bodies on the basis of the axial position of the slider.

### Effects of the Invention

According to the invention, when the rotary position of the movable-side magnet changes relatively to the position of the fixed-side magnet, the slider is displaced axially by magnetic force, and the amount of rotary displacement between the first and second rotary bodies is detected by the detecting means. The detecting means may be any general sensor for detecting the position of a linearly moving member.

Thus, according to the invention, the relative rotation between the movable-side magnet and the fixed-side magnet is converted by magnetic force into the axial displacement. Therefore, it is possible to set a greater skew angle without being restricted by the surface pressure in comparison with a device that mechanically performs the conversion using a cam and a cam follower. Therefore, this invention makes it possible to provide a rotation detector of a smaller radial size in comparison with the above-mentioned device using the cam and the cam follower.

In particular, in the case the pedaling force of the rider on the bicycle with a motor-operated power unit is detected with the rotation detector of the invention, it is possible for the rider to operate the bicycle with the same feeling as when operating an ordinary bicycle, and it is possible to detect the rider's pedaling force with high accuracy, while reducing the radial size of the rotation detector. The reason for the above possibilities is that it is possible as described above to set the great skew angle and set an optimum ratio of the relative rotation angle between the fixed-side magnet and the movable-side magnet to the axial displacement amount of the movable-side magnet when one of the magnets rotates relatively to the other.

In other words, providing this rotation detector in the power unit for the motor-operated bicycle makes it possible to set a relatively great spring constant for the compression coil spring interposed in the power transmission system between the pedal crankshaft and the rear wheel driving chain sprocket. Therefore, it is possible to prevent unusual feeling from being given to the rider. This rotation detector also makes it possible to design a relatively great displacement amount of the movable-side magnet. Therefore, it is possible to detect the displacement of the movable-side magnet with a sensor with high accuracy to improve the accuracy of detecting the pedaling force.

According to the invention, a coil for detecting the change in the magnetic field is unnecessary. Therefore, it is possible to provide a rotation sensor for detecting the rotary displacement between two rotary bodies while holding down the electric power consumption.
Moreover, the rotation detector according to the invention is the one that converts rotary displacement amount into axial displacement amount by means of magnetic forces of the movable-side magnet and the fixed-side magnet and that may be constituted with simple-shaped components. Therefore, in detecting the rotary displacement amount between the two rotary bodies, constitution is simpler in comparison with employing a constitution for magnetically detecting torsional deformation amount of slits and raised strips and in comparison with using a plural number of planetary gear mechanisms. Furthermore, because it is possible to constitute using generally available materials, manufacturing cost may be reduced.

The rotation detector of the invention can use a magnet attached to the slider and dedicated for position detection in order to detect the axial displacement amount of the slider by the magnetic forces of the movable-side magnet and the fixed-side magnet. Employing the above constitution makes it possible to easily obtain linear output in proportion to the displacement amount with a simple constitution and the improved detection accuracy.
Moreover, because the rotation detector according to the invention uses magnets, it is possible to easily fabricate it with varied skew angle that is hard to manufacture by machining. Therefore, it is possible to freely adjust the output value relative to the phase difference.

### [Brief Description of Drawings]

FIG. 1 is a plan view of a power unit of a motor-operated bicycle provided with a torque sensor constituted using a rotation detector according to the invention.
FIG. 2 is an enlarged sectional view of the torque sensor.
FIG. 3 is an oblique view of the magnetization pattern of a fixed-side magnet and a movable-side magnet.
FIG. 4 is an oblique view of the magnetization pattern of a position detecting magnet.
FIG. 5 is an oblique view of a slide guide ring.
FIG. 6 is an oblique view of another example of forming a position detecting magnet.
FIG. 7 is an enlarged sectional view of the torque sensor in the second embodiment.
FIG. 8 is an enlarged sectional view of the torque sensor in the third embodiment.
FIG. 9 is a plan view of the power unit of the motor-operated bicycle of the fourth embodiment.
FIG. 10 is an enlarged sectional view of the torque sensor shown in FIG. 9.
FIG. 11A is a side view for explaining the magnetization pattern of the fixed-side magnet and the movable-side magnet in FIG. 10.
FIG. 11B is a plan view for explaining the magnetization pattern of FIG. 11A.
FIG. 12A is a side view for explaining another magnetization example of the fixed-side magnet and the movable-side magnet in FIG. 10.
FIG. 12B is a plan view for explaining the magnetization pattern of FIG. 12A.
FIG. 13 is a sectional view as seen along the line XIII-XIII in FIG. 10.
FIG. 14A is a side view for explaining still another magnetization example of one of the fixed-side magnet and the movable-side magnet in FIG. 10.
FIG. 14B is a plan view for explaining the magnetization pattern of FIG. 14A.
FIG. 15A is a side view for explaining still another magnetization example of one of the fixed-side magnet and the movable-side magnet in FIG. 10.
FIG. 15B is a plan view for explaining the magnetization pattern of FIG. 15A.
FIG. 16 is a graph showing the relationship between phase angle and repelling force when the magnet of the magnetization pattern of FIGs. 14A and 14B and the magnet of the magnetization pattern of FIGs. 15A and 15B are used in combination.
FIG. 17 is a sectional view of the power unit for the motor-operated bicycle in the fifth embodiment.
FIG. 18 is an enlarged sectional view of the torque sensor shown in FIG. 17.
FIG. 19 is a side view of a slider as seen from the right hand of the vehicle body.
FIG. 20 is a plan view of the slider.
FIG. 21 is a sectional view as seen along the line XXI-XXI in FIG. 20.
FIG. 22 is a side view of the slide guide ring as seen from the left hand of the vehicle body.
FIG. 23 is a sectional view as seen along the line XXIII-XXIII in FIG. 22.
FIG. 24 is a graph showing the relationship between skew angle and surface pressure.
FIG. 25 shows a skew angle on a great outside diameter.
FIG. 26 shows a skew angle on a small outside diameter.

### Best Mode for Carrying out the Invention

### (First Embodiment)

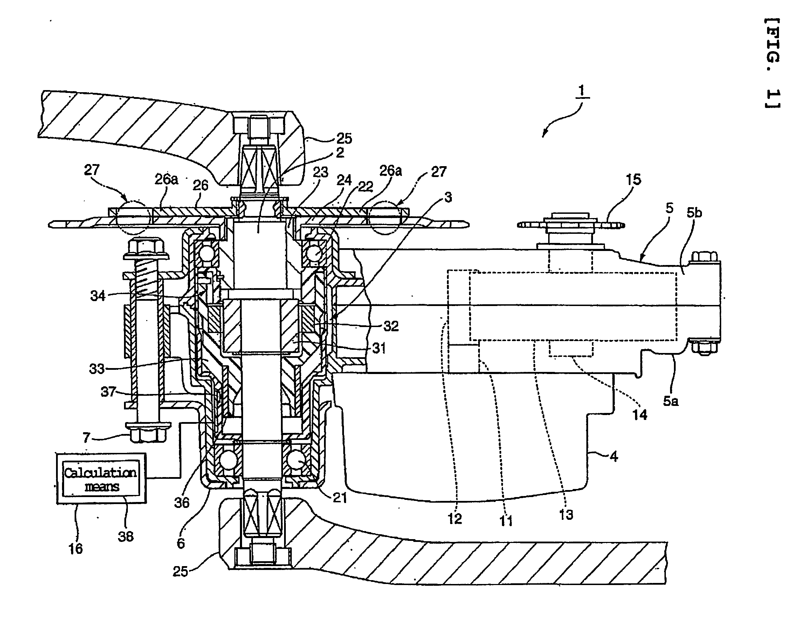

A rotation detector and a torque sensor as the first embodiment of the invention will hereinafter be described in reference to FIGs.1 through 6. The description here is made on the constitution of the torque sensor for a motor-assisted bicycle including the rotation detector of the invention. FIG. 1 depicts essential parts in section.

FIGs. 1 through 6 show a power unit 1 for the motor-operated bicycle of this embodiment. The power unit 1 is attached to a hanger part of a vehicle body frame (not shown) and includes: a pedal crankshaft 2 described later, a torque sensor 3 for detecting a rider's pedaling force applied to a pedal (not shown) connected to the pedal crankshaft 2, a motor 4 for driving a rear wheel. The power unit 1 is mounted on the vehicle body frame so that the left hand in FIG. 1 is the front side of the vehicle body and the right hand in FIG. 1 is the rear side of the vehicle body.

Components of the power unit 1 are supported with a housing 5 dividable in lateral directions of the vehicle body. The housing 5 is made up of a left half 5a and a right half 5b, and mounted on a vehicle body frame through an attachment bracket 6 provided at one end on the vehicle body front side (left end in Fig. 1) and another attachment bracket (not shown) provided on the vehicle body rear side. The attachment bracket 6 on the front side is secured to the vehicle body frame using a bolt 7 shown in FIG. 1.

The housing 5 supports the pedal crankshaft 2 for free rotation at one end on the vehicle body front side and supports the motor 4 at a position behind the crankshaft 2. The motor 4 is attached to the left half 5a of the housing 5 and connected to an output shaft 14 in the rear part of the housing through: a pinion 12 provided on an output shaft 11, a driven gear 13 engaging with the pinion 12, and a one-way clutch (not shown) interposed in the axial part of the driven gear 13. The one-way clutch used for transmitting rotation only in the advancing direction to the output shaft 14 is used.

The output shaft 14 supports the driven gear 13 and its both ends are supported for free rotation on the housing 5, and projects from the right half 5b of the housing 5 to the right hand of the vehicle body. A sprocket 5 for routing a rear wheel driving chain (not shown) is provided at the projecting end of the output shaft 14.
The output of the motor 4 is controlled with a controller 16 to be approximately in proportion to the magnitude of the pedaling force detected by a torque sensor 3 described later.

The pedal crankshaft 2 is supported for free rotation at its both in the vehicle width direction ends through bearings 21 and 22 on the housing 5, and passes through the housing 5 in the vehicle width lateral direction of the vehicle. A bearing 22 for supporting the end of the pedal crankshaft 2 on the vehicle body right side is interposed between the outside round surface of a sprocket supporting boss 23 fitted for free rotation on the right side end of the pedal crankshaft 2 and the right half 5b of the housing 5.

The boss 23 is made so that its end on the vehicle body right side projects to the right from the housing 5. A human power driven sprocket 24, over which a rear wheel driving chain (not shown) is routed is threaded this end of the boss 23. The chain is routed over the human power driven sprocket 24, the sprocket 15 on the output shaft 14, a tension sprocket (not shown), and a free wheel of the rear wheel. The free wheel is provided with a one-way clutch for transmitting power from the chain side to the hub side only.

A pedal crank 25 having a pedal (not shown) attached to its distal end is respectively attached to both ends of the crankshaft 2. A driving lever 26 for joint rotation with the pedal crankshaft 2 is attached through splines to part of the pedal crankshaft 2 projecting to the right from the housing 5.

This driving lever 26 has a plural number of lever main parts 26a extending radially from the center of the pedal crankshaft 2, and is located adjacent to the right side of the human power driven sprocket 24. The peripheral parts of the driving lever 26 and the sprocket 24 are interconnected through a connection mechanism 27 described later.

The connection mechanism 27 is to transmit the pedaling force from the driving lever 26, located on the pedal crankshaft side in the power transmission system, to the sprocket 24. The connection mechanism 27 is made up of: a pressing member (not shown) provided integrally with the lever main part 26a of the driving lever 26, a pressed member (not shown) provided integrally with the sprocket 24, and compression coil springs (not shown) elastically interposed between the pressing member and the pressed member in the rotary direction. The connection mechanism 27 is provided on both the driving lever 26 and the sprocket 24 to pass through them in their thickness (vehicle width) direction.

With the driving lever 26 and the sprocket 27 interconnected through the connection mechanism 27 as described above, the rider's pedaling force is transmitted from the driving lever 26 to the sprocket 24 via the connection mechanism 27, and further from the sprocket 24 through the chain to the rear wheel. When the vehicle runs forward in this way, the compression coil springs of the connection mechanism 27 are compressed, so that the rotary position of the driving lever 26 is displaced forward relatively to the rotary position of the sprocket 24.

In other words, at this time, the rotary positions of the driving lever 26 and the pedal crankshaft 2 are displaced clockwise relative to the sprocket 24 as seen from the right side of the vehicle body. With the torque sensor 3 in this embodiment, rotary displacement between both of the components is detected and the magnitude of the pedaling force is calculated from the displacement amount.

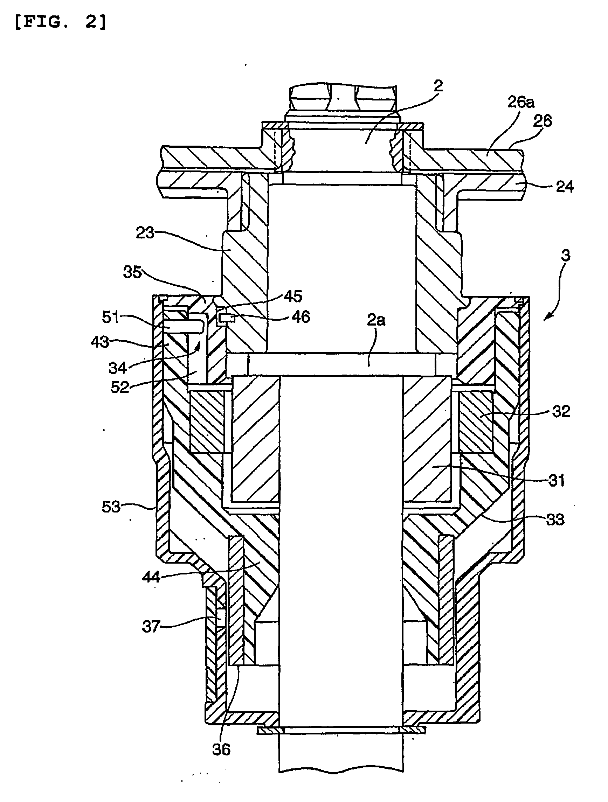

The torque sensor 3, as shown in FIG. 1 and FIG. 2, is made up of: the first rotary body including of the pedal crankshaft 2, the driving lever 26, etc.; the second rotary body 2 including the sprocket supporting boss 23 connected to the sprocket 24, the slide guide ring 35 (described later), etc. ; a slider 33 located coaxially with the second rotary body 2 and connected through a slide guide means 34 (described later) to the slide guide ring 35 of the second rotary body 2 so that its rotation relative to the second rotary body 2 is restricted while its axial displacement is permitted, a movable-side magnet 32 fixed coaxially with the slider; a fixed-side magnet 31 fixed coaxially with the first rotary body (pedal crankshaft 2) with its axial displacement restricted; and a detection means (described later) for detecting the rotary displacement amount between the first rotary body and the second rotary body based on the axial position of the slider 33. The detection means is made up of: a cylindrical position detecting magnet 36 provided at the end of the slider 33 on the vehicle body left side, a Hall element 37 facing the outside round surface of the position detecting magnet 36 through a gap, a calculation means 38 (See FIG. 1) of the controller 16 connected to the Hall element 37, etc.

The fixed-side magnet 31 in this embodiment is as shown in FIG. 2 made of a cylindrical permanent magnet coaxially press-fitted over the pedal crankshaft 2 so as to rotate together with the latter. The fixed-side magnet 31 is axially positioned with an annular flange portion 2a formed integrally with the pedal crankshaft 2.

The movable-side magnet 32 is made of a cylindrically formed permanent magnet and secured to the slider 33 as described later so that its inside round surface faces the outside round surface of the fixed-side magnet 31 through a gap. In other words, the fixed-side magnet 31 is inserted into the movable-side magnet 32.
The movable-side magnet 32 of this embodiment is glued to the inside round surface of the slider 33 (described later), positioned coaxially with both the pedal crankshaft 2 and the fixed-side magnet 31, as shown in FIG. 2, so as to overlap the fixed-side magnet 31 as seen in the direction at a right angle to the axial direction. The movable-side magnet 32 may also be made integrally with the slider 33 by insert forming. The movable-side magnet 32 of this embodiment is positioned to face the outside round surface of the fixed-side magnet 31 on the end of the vehicle body right side in the state of the slider 33 being located in the initial position shown in FIG. 1 and FIG. 2.

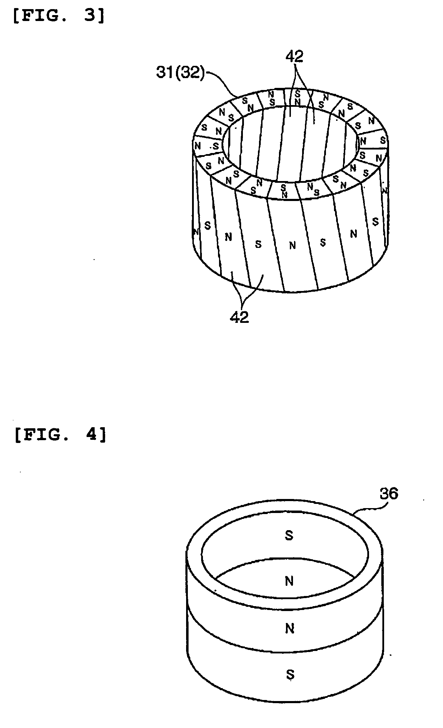

These fixed-side magnet 31 and movable-side magnet 32, as shown in FIG. 3, are provided with a large number of magnetic poles 42, 42, ... paired in radial direction on outside and inside round surfaces. These magnetic poles 42 are provided by magnetization in radial direction so that where an N-pole is on the outside round surface for example, an S-pole is on the inside round surface. The poles are provided to extend from axial one end to the other on both inside and outside round surfaces.

Each magnetic pole 42 is formed to be different in polarity from the circumferentially adjacent magnetic pole 42, and to be displaced to one circumferential direction as it extends from one axial end to the other. These magnetic poles 42 of this embodiment are formed in the shape of part of an imaginary spiral centered on the axes of the fixed-side magnet 31 and the movable-side magnet 32, or in a spiral shape. The movable-side magnet 32 is formed greater in both outside and inside diameters and shorter in axial length, than the fixed-side magnet 31, but to magnetize the same in pattern as the fixed-side magnet 31. Each of the magnetic poles 42 of the fixed-side magnet 31 and the movable-side magnet 32 of this embodiment is formed to be part of the spiral twisted counterclockwise toward the left of the vehicle body as seen from the right side (from above in FIG. 3) in the state of being attached to the vehicle body. The radial thickness of the cylindrically formed movable-side magnet 32 is made smaller than that of the fixed-side magnet 31.

The slider 33 for holding the movable-side magnet 32 is made of plastic material in a cylindrical shape as shown in FIG. 2. One end of the slider 33 on the vehicle body right side is formed with a large diameter portion 43 while its other end on the vehicle body left side is formed with a small diameter portion 44. The large diameter portion 43 is formed to fit for free sliding to the outside round surface of the slide guide ring 35.

The slide guide ring 35 is fitted to and supported by one end of the sprocket supporting boss 23 on the vehicle body left side. An engagement groove 45 formed in the inside round surface of the slide guide ring 35 engages with a pin 46 planted in the boss 23 so that the slide guide ring 35 is restricted from making rotary displacement relative to the boss 23 to rotate together with the boss 23.

The small diameter portion 44 of the slider 33 is formed to be fitted for free rotation to the outside round surface of the pedal crankshaft 2, with its outside round surface holding a position detecting magnet 36 described later. In other words, the slider 33 of this embodiment, fits to both the slide guide ring 35 and the pedal crankshaft 2 and is movable in both rotary and axial directions in the state the slide guide means 34 (described later) is not installed yet, The slider 33 also holds the movable-side magnet 32 in the axially middle portion between the two fitting positions, while holding the position detecting magnet 36 in the end portion on the vehicle body left side.

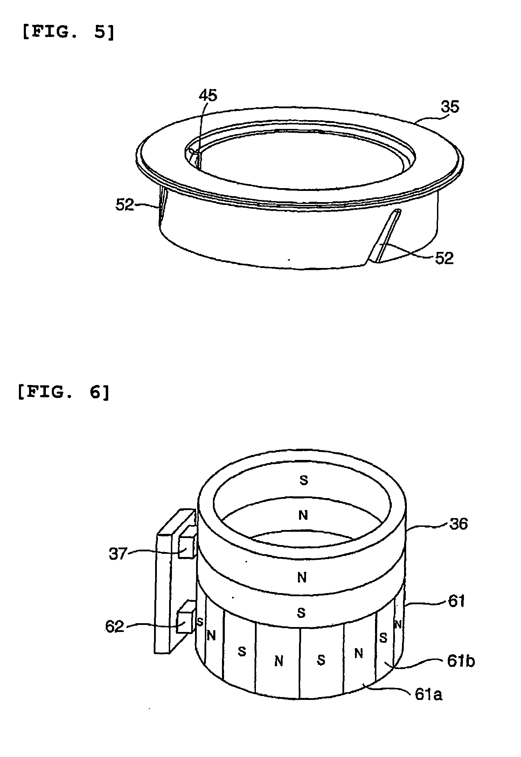

Pins 51 that constitute part of the slide guide means 34 are planted at three equally circumferential intervals in the large diameter portion 43 of the slider 33, so that the pins 51 project radially inward and fit for free sliding in grooves 52 formed in three circumferential positions in the outside round surface of the slide guide ring 35. The grooves 52 of this embodiment are formed as shown in FIG. 5, to be at the same tilted angle as but to be opposite in direction from the magnetic poles 42 of the fixed-side magnet 31 and the movable-side magnet 32, or in the form to be part of a spiral twisted clockwise toward the vehicle body left side as seen from the vehicle body right side (from above in FIG. 3) in the state of being installed in the vehicle body.
Incidentally, although the grooves 52 may be twisted in the same direction as that of the magnetic poles 42, in is case, the tilted angle of the grooves must be made different from that of the magnetic poles 42. Otherwise the slider 33 cannot be displaced relatively to the slide guide ring 35. The different tilted angle may be appropriately chosen depending on the sliding property of the slide guide ring 35 and the maximum intended displacement amount of the slider 33.
Further, the grooves 52 may be linear in the axial direction. The slide guide means 34 mentioned in this invention is constituted with the grooves 52 and the pins 51. In other words, the slider 33, is restricted from rotating relatively to the second rotary body having the slide guide ring 35, and is permitted for the axial displacement as it is connected through the slide guide means 34 to the slide guide ring 35, The slide guide ring 35 having the grooves 52 is made of plastic material of a low coefficient of friction so that the pins 51 move smoothly along the grooves 52.

The slider 33, when no external forces are applied, stands in a position in which mutually working magnetic forces of the fixed-side magnet 31 and the movable-side magnet 32 are stabilized, or in a position in which, for example, an N-pole of the fixed-side magnet 31 faces an S-pole of the movable-side magnet 32.

In the above state, when the fixed-side magnet 31 is rotated clockwise relatively to the movable-side magnet 32 as seen from the vehicle right side, the movable-side magnet 32 tends to follow the rotation of the fixed-side magnet 31 as attracted (or repelled) by magnetic force. At this time, as the pins 51 of the slider 33 are in engagement with the grooves 52 of the slide guide ring 35, the movable-side magnet 32 is restricted from freely following the rotation of the fixed-side magnet 31, and rotary displacement occurs between both the magnets 31 and 32. As the mutually opposing magnetic poles 42 of the fixed-side magnet 31 and the movable-side magnet 32 are formed in spiral patterns, the movable-side magnet 32 is urged by axial magnetic urging force the so-called thread action, and moves together with the slider 33 to the left side of the vehicle body.

The slider 33, as the three pins 51 move within the grooves 52, axially moves between the initial position shown in FIG. 1 and FIG. 2 and a moving position (not shown) toward the vehicle body left side from the initial position while making rotary displacement relative to the slide guide ring 35 along the spiral. In this embodiment, because the grooves 52 are twisted in an opposite direction from the magnetic poles 42, the pins 51 smoothly move within the grooves 52 toward the vehicle body left side.
The rotary attachment position of the movable-side magnet 32 relative to the slider 33 is determined to produce the maximum attracting force between the fixed-side magnet 31 and the movable-side magnet 32 in the state of the slider 33 located in the initial position.

In other words, the movable-side magnet 32 of this embodiment is displaced toward the left of the vehicle body while rotating in the same direction as the fixed-side magnet 31 in the state of the pedal crankshaft 2 rotating in the direction in which the motor-operated bicycle runs forward, when the fixed-side magnet 31 rotates relatively to the movable-side magnet 32 in the forward rotary direction (clockwise as seen from the right side of the vehicle). Incidentally, the magnetic poles 42 of the fixed-side magnet 31 and the movable-side magnet 32 will exhibit the same effect as that of this embodiment when at least one each of N-pole and S-pole are present in a circumferential row.

The position detecting magnet 36 is made of a cylindrical permanent magnet, into which the small diameter portion 44 of the slider 33 is fit, and glued coaxially to the small diameter portion 44. The position detecting magnet 36 is magnetized in the radial direction as shown in FIG. 4 with one axial end being N-pole and the other S-pole. Incidentally, the position detecting magnet 36 may be made integral with the slider 33 by insert forming.

The Hall element 37 facing the outside round surface of the position detecting magnet 36 is attached, as shown in FIG. 2, to a sensor case 53 formed in a cylindrical shape encircling the slider.33 in the radial direction. The Hall element 37 detects the intensity of the magnetic field (magnitude of magnetic flux density) and outputs a detected signal indicating the intensity to the controller 16. According to this embodiment, the position detecting sensor as mentioned in this invention is constituted with the Hall element 37.
The Hall element 37 used in this embodiment is the one with its output changing in a so-called analog manner in proportion to the magnitude of magnetic flux. In this embodiment, a Hall IC is used as the Hall element 37. Incidentally, for detecting the magnetic field intensity of the position detecting magnet 36, besides the Hall element of other type than the Hall IC, other magnetic sensor such as a reed switch may be used.

The sensor case 53 is supported with the housing 5 so that its rotation is restricted by the housing 5 and its axial displacement is restricted by the pedal crankshaft 2. The Hall element 37 detects the magnetic flux of the position detecting magnet 36 rotating relatively to the housing 5. The magnitude of the magnetic flux density of the position detecting magnet 36 detected with the Hall element 37 changes corresponding to the axial position of the position detecting magnet 36. Therefore, detecting the magnitude of the magnetic flux density with the Hall element 37 makes it possible to detect the axial position of the position detecting magnet 36.

The controller 16, receiving a detection signal sent from the Hall element 37, detects the axial position of the position detecting magnet 36 and calculates the relative rotary displacement amount between the fixed-side magnet 31 and the movable-side magnet 32 based on the detected position, in other words, the relative rotary displacement of the driving lever 26 to the human power driven sprocket 24 and further calculates the pedaling force magnitude from the displacement. After detecting the pedaling force magnitude as described above, the controller 16 controls the output of the motor 4 to be approximately in proportion to the pedaling force magnitude.

With the power unit 1 for the motor-operated bicycle having the torque sensor 3 constituted as described above, when the pedal crankshaft 2 rotates without load while the vehicle runs forward, the compression coil spring of the connection mechanism 27 is not compressed, the driving lever 26 and the driving sprocket 24 rotate in phase, and the pedal crankshaft 2, the boss 23, and the slide guide ring 35 also rotate in phase.

At this time, as no relative rotary displacement occurs between the fixed-side magnet 31 and the movable-side magnet 32, the slider 33 makes no axial displacement.
In other words, when the pedal crankshaft 2 (driving lever 26) and the human power driven sprocket 24 rotate in phase, as the movable-side magnet 32 and the fixed-side magnet 31 are kept in the state of magnetically attracted to each other, and thus the slider 33 having the movable-side magnet 32 rotates in phase with the pedal crankshaft 2.

In the power unit 1, when the rider's pedaling force on the pedal crankshaft 2 increases, the compression coil spring interposed between the driving lever 26 and the human power driven sprocket 24 is compressed. As a result, the driving lever 26 is displaced in the rotary direction from the human power driven sprocket 24. At this time, the rotary position of the driving lever 26 is displaced forward in the rotary direction corresponding to the compressed dimension of the compression coil spring in comparison with the rotary position of the sprocket 24.

When the rotary displacement occurs between the two components as described above, the fixed-side magnet 31 rotating together with the driving lever 26 is displaced in the rotary direction from the movable-side magnet 32 rotating together with the human power driven sprocket 24. Here, the fixed-side magnet 31 is displaced in the rotary direction from the movable-side magnet 32.

When the rotary position of the fixed-side magnet 31 is displaced from the rotary direction of the movable-side magnet 32, , the movable-side magnet 32 is magnetically attracted toward the displacement direction of the fixed-side magnet 31, or in the forward rotary direction as these magnets are magnetically attracting each other. However, as the slider 33 having the movable-side magnet 32 is connected through the pins 51 to the grooves 52 in the slide guide ring 35 located on the side of the human power driven sprocket 24, the slider 33 is restricted from making relative rotation to the slide guide ring 35. Furthermore, because the magnetic poles 42 of the fixed-side magnet 31 and the movable-side magnet 32 are magnetized in the spiral pattern, magnetic urging force acts on the movable-side magnet 32 in the axial direction due to the relative rotation of the fixed-side magnet 31 to the movable-side magnet 32.

The movable-side magnet 32 of this embodiment is urged axially by the magnetic force as described above and displaced together with the slider 33 toward the left side of the vehicle body relatively to the slide guide ring 35. At this time, because the grooves 52 in the slide guide ring 35 are formed in the spiral pattern with their twist angle opposite from that of the magnetic poles 42, frictional resistance between the pins 51 and the grooves 52 is small when the slider 33 moves in the above-mentioned direction, so that the slider 33 moves smoothly.

When the slider 33 moves toward the left side of the vehicle body as described above, the Hall element 37 detects the change in the position of the position detecting magnet 36, and the controller 16 determines the magnitude of the pedaling force from the axial displacement amount of the position detecting magnet 36 (slider 33). Then the controller 16 controls the output of the motor 4 to be in proportion to the pedaling force. As a result, the power unit 1 for the motor-operated bicycle is to drive the rear wheel by both the pedaling force and the power of the motor 4 that is approximately in proportion to the pedaling force.

Because the rotation detector constituting the torque sensor 3 of this embodiment is the one that converts the relative rotation between the fixed-side magnet 31and the movable-side magnet 32 into the axial displacement by magnetic force, there is no restriction of surface pressure, and it is possible to take a greater skew angle in comparison with a device that performs the conversion mechanically with the cam and the cam follower. Therefore, this embodiment makes it possible to manufacture the radially downsized rotation detector while setting an optimum ratio of the relative rotary angle between the first rotary body made up of the pedal crankshaft 2, such as the driving lever 26, and the like, and the second rotary body made up of the human power driven sprocket 24, the sprocket supporting boss 23, and the slide guide ring 35 to the axial displacement amount of the slider 33.

Further, because the above-described rotation sensor is the one that converts the rotary displacement into the axial displacement by magnetic forces of the fixed-side magnet 31and the movable-side magnet 32 to detect the rotary displacement from the axial displacement, unlike the conventional rotation detector (torque sensor) using changes in permeability, a coil for detecting the change in the magnetic field becomes unnecessary.
As a result, the rotation detector (torque sensor 3) according to this embodiment makes it possible to detect the relative rotary displacement between the two rotary bodies (the pedal crankshaft 2 and the human power driven sprocket 24) and detect the magnitude of the pedaling force (torque) that has caused the relative rotary displacement between the two rotary bodies, while reducing electric power consumption.

Further, because the rotation detector used in the torque sensor 3 of this embodiment is the one that detects the axial displacement of the slider 33 displaced by the magnetic forces of the fixed-side magnet 31 and the movable-side magnet 32, the detector may be constituted using components in simple shapes. Thus, the torque sensor 3 for detecting the rotary displacement between the two rotary bodies (the pedal crankshaft 2 and the human power driven sprocket 24) is simpler in constitution in comparison with the conventional torque sensor of the magnetostriction type for magnetically detecting the torsional displacement amounts of the slits and raised strips and in comparison with the torque sensor using a plural number of planetary gear mechainisms, and also may be constituted using generally available materials.
Therefore, it may be manufactured at a low cost.

In the torque sensor 3 of this embodiment, because the fixed-side magnet 31 and the movable-side magnet 32 are magnetized in the spiral pattern, the magnetic force that urges the movable-side magnet 32 in the axial direction gradually increases with the increase in the relative rotary displacement amount between the fixed-side magnet 31 and the movable-side magnet 32.

Thus, because this embodiment makes it possible to axially displace the movable-side magnet 32 in approximate proportion to the change in the relative rotary displacement amount between the driving lever 26 and the human power driven sprocket 24, it is possible to accurately detect the magnitude of the torque (pedaling force) having produced the relative rotary displacement between the driving lever 26 and the human power driven sprocket 24.

In the torque sensor 3 of this embodiment, the position detecting magnet 36, as shown for example in FIG. 6, may be provided with a rotation detecting magnet 61 and with a rotation detecting Hall element 62 for detecting the magnetic field of the rotation detecting magnet 61. The rotation detecting magnet 61 is formed in a cylindrical shape like the position detecting magnet 36 and secured, for example, to one end of the position detecting magnet 36 on the vehicle body left side. The rotation detecting magnet 61 may also be made integral with the position detecting magnet 36, as in a specified position magnetized.

The magnetization pattern of this rotation detecting magnet 61 is formed with a circumferential row of a large number of alternate N-poles 61a and S-poles 61b. Employing this constitution makes it possible to use the rotation detecting Hall element 62 and detect the revolution of the slider 33, rotating at approximately the same revolution as the pedal crankshaft 2. When it becomes possible to detect the revolution of the pedal crankshaft 2 or a similar rotary body (human power driven sprocket 24), it becomes possible in the power unit 1 for the motor-operated bicycle to determine the vehicle speed by calculation.

Therefore, for example, the motor-operated bicycle provided with a motor-operated automatic transmission (not shown) can perform automatic shifting using the vehicle speed and pedaling force. In other words, in a case that the pedaling force increases despite the slow rotation of the pedal crankshaft 2 such as when riding on an uphill, it is possible to automatically shift down the transmission gear ratio to a lower one so as to alleviate the burden on the rider.

The torque sensor 3 of this embodiment is shown as an example in which the grooves 52 serving to guide the axial displacement of the slider 33 are formed in the spiral pattern with their tilted angles equal to those of the magnetic poles 42 while their twist angles opposite from those of the magnetic poles 42. However, the grooves 52 may be formed in the spiral pattern with their twist angle the same as those of the magnetic poles 42 if their tilt angles are set different from those of the magnetic poles 42. Or, the grooves 52 may be formed parallel to the axis of the pedal crankshaft 2. In the case the grooves 52 are formed parallel to the axis of the pedal crankshaft 2, the slider 33 makes no rotary displacement relatively to the slide guide ring 35 but only axial displacement.

In contrast to the above, it is also possible to form the grooves 52 in the slide guide ring 35 in the spiral pattern, and the magnetic poles 42 of the fixed-side magnet 31 and the movable-side magnet 32 parallel to the axis of the pedal crankshaft 2. In this case, the spiral grooves 52 and the pins 51 substantially function as a torque cam, and the movable-side magnet 32 is urged forward in the rotary direction by the magnetic force occurring between itself and the fixed-side magnet 31, so that the slider 33 is displaced toward the left side of the vehicle body relatively to the slide guide ring 35. Incidentally, while the above embodiment is shown as an example in which the pins 51 are planted in the slider 33, and the grooves 52 are formed in the slide guide ring 35, it is also possible to form the grooves 52 on the inside round surface of the slider 33, and to plant the pins 51 for engaging with the grooves 52 in the slide guide ring 35.

### (Second and Third Embodiments)

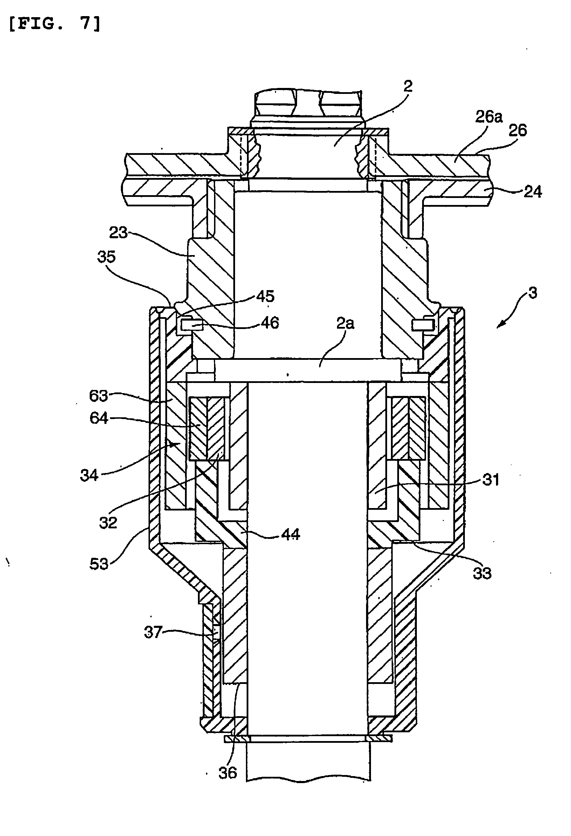

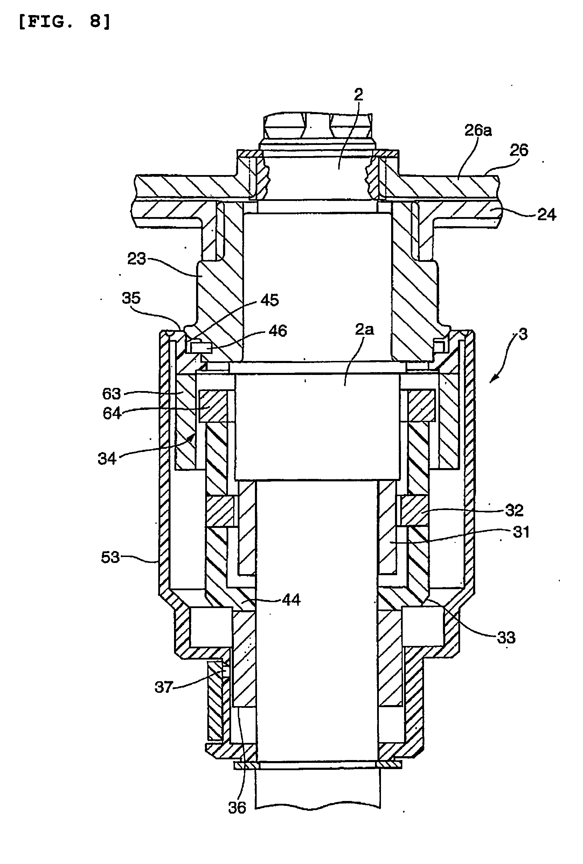

The slide guide means for use in the torque sensor of the invention may be constituted, besides using the grooves 52 and the pins 51 as shown in the first embodiment, using permanent magnets as shown in FIG. 7 and FIG. 8.
FIG. 7 is a sectional view of the torque sensor in the second embodiment. FIG. 8 is a sectional view of the torque sensor in the third embodiment. In these drawings, components the same as or like those explained in reference to FIG. 1 through FIG. 6 are provided with the same reference numerals, appropriately omitting detailed explanation.

The slide guide means 34 of the torque sensor 3 shown in FIG. 7 is made up of: an outside magnet 63 made of a cylindrical permanent magnet secured to one end of the slide guide ring 35 on the vehicle body left side, and an inside magnet 64 made of a cylindrical permanent magnet located radially inside the outside magnet 63.
The outside magnet 63 is coaxially supported with the slide guide ring 35. The outside magnet 63 is formed in the same axial length as the fixed-side magnet 31.

The inside magnet 64 is tightly fitted to and coaxially located the outside round surface of the movable-side magnet 32, and supported by the slider 33 together with the movable-side magnet 32. A minute gap is present between the outside round surface of the inside magnet 64 and the inside round surface of the outside magnet 63. The slider 33, with a small diameter portion 44 slidably fitted to the pedal crankshaft 2, is supported with the pedal crankshaft 2 for free rotation and free axial displacement.

The magnetizing pattern of the outside magnet 63 and the inside magnet 64 is set so that these magnets attract or repel each other by magnetic forces and that the outside magnet 63 follows the rotation of the inside magnet 64 to rotate together with the inside magnet 64. For example, the magnetic poles of the outside magnet 63 and the inside magnet 64 may be formed in the same pattern as the magnetic poles (N-poles 61a and S-pole 61b) of the rotation detecting magnet 61 shown in FIG. 6.

In other words, the outside magnet 63 and the inside magnet 64 are magnetized in the radial direction so that magnetic poles are formed on their inside and outside round surfaces. The magnetic poles are formed in a large number to extend from one axial end to the other in parallel the axis of the pedal crankshaft 2, in alternate polarity from one pole to another.

The magnetic poles of the outside magnet 63 and the inside magnet 64 may be formed to extend, besides parallel to the pedal crankshaft 2 as described above, spirally like the magnetic poles 42 of the fixed-side magnet 31 and the movable-side magnet 32 shown in the first embodiment. When this constitution is employed, the slider 33 is to be axially displaced while being displaced in the rotary direction like the slider 33 shown in the first embodiment. In the case the magnetic poles of the outside magnet 63 and the inside magnet 64 are formed in the spiral pattern, it is also possible to form the magnetic poles 42 of the fixed-side magnet 31 and the movable-side magnet 32 parallel to the axis of the pedal crankshaft 2.

The slide guide means 34 of the torque sensor 3 shown in FIG. 8 is made up of an outside magnet 63 made of a cylindrical permanent magnet secured to one end of the slide guide ring 35 on the vehicle body left side and an inside magnet 64 made of a ring-shaped permanent magnet located radially inside the outside magnet 63.
The outside magnet 63 is supported to be located coaxially with the slide guide ring 35. The outside magnet 63 is formed the same in axial length as the fixed-side magnet 31.

The inside magnet 64 is secured to one end of the large diameter portion 43 of the slider 33 on the vehicle body right side to be located coaxially with the slider 33. The magnetizing pattern of the outside magnet 63 and the inside magnet 64 is set the same as that of the outside magnet 63 and the inside magnet 64 of the torque sensor 3 shown in FIG. 7. In other words, also with the torque sensor 3 shown in FIG. 8, it is possible to employ: a pattern in which the magnetic poles of the outside magnet 63 and the inside magnet 64 are axially parallel to the pedal crankshaft 2, a pattern in which the magnetic poles of the outside magnet 63 and the inside magnet 64 are spiral, or a pattern in which the magnetic poles of the outside magnet 63 and the inside magnet 64 are spiral and also the magnetic poles 42 of the fixed-side magnet 31 and the movable-side magnet 32 are parallel to the axis of the pedal crankshaft 2.

The above-described first, second, and third embodiments are examples in which the movable-side magnet 32 is displaced from the initial position located on the vehicle body right side toward the vehicle body left side. However, irrespective of such a limitation, on the rotation detector according to the invention, a constitution may be employed in which the movable-side magnet 32 is displaced from the initial position located on the vehicle body left side toward the vehicle body right side. Moreover, the rotary direction of the movable-side magnet 32 may be opposite from that shown in the above embodiments.

### (Fourth Embodiment)

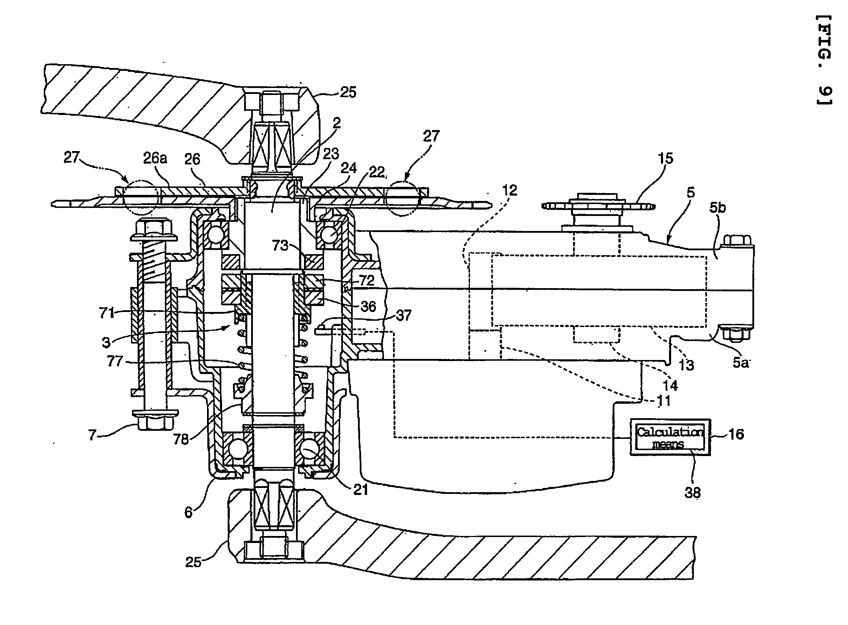

An embodiment of the torque sensor according to the invention described in Claim 8 through claim 10 will be described in detail in reference to FIG. 9 through FIG. 16.

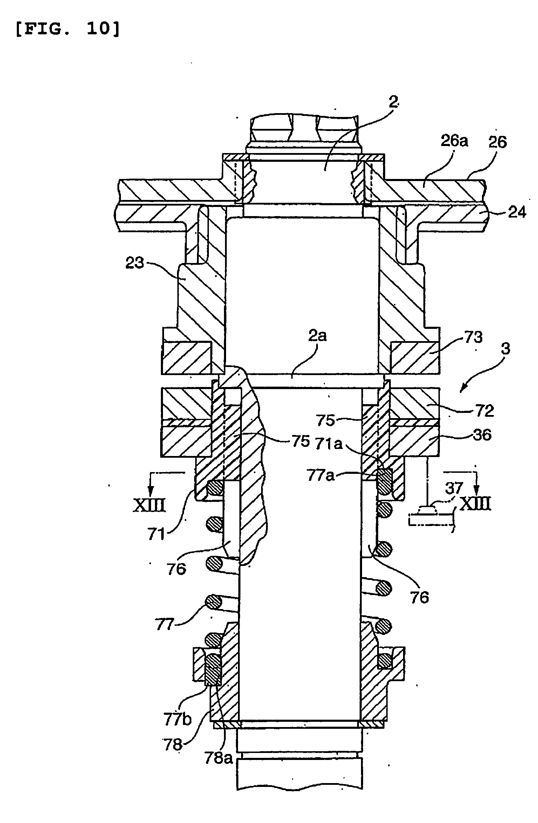

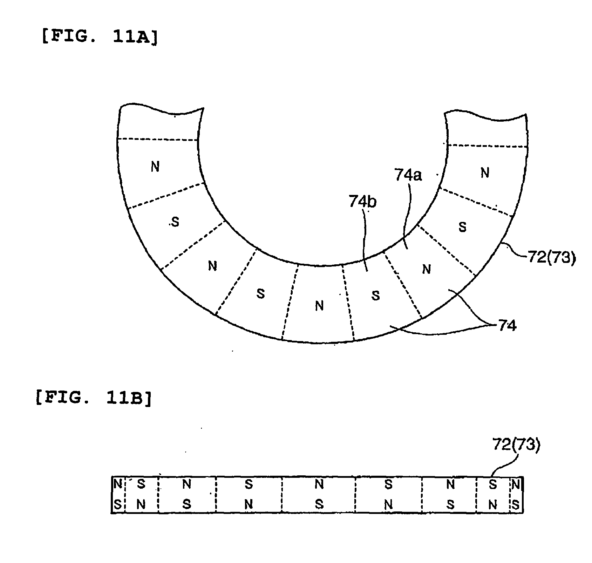

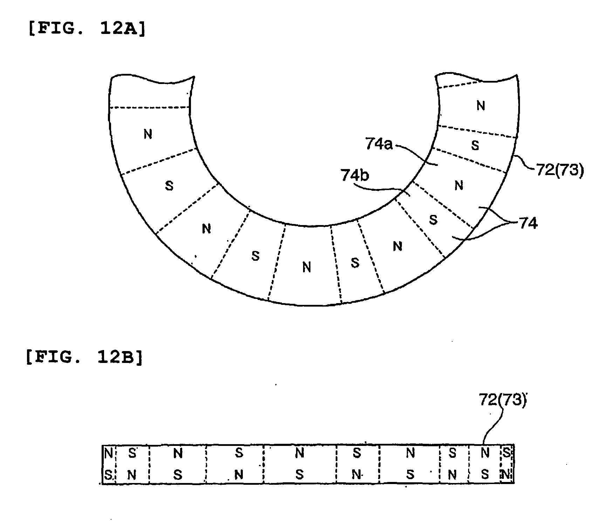

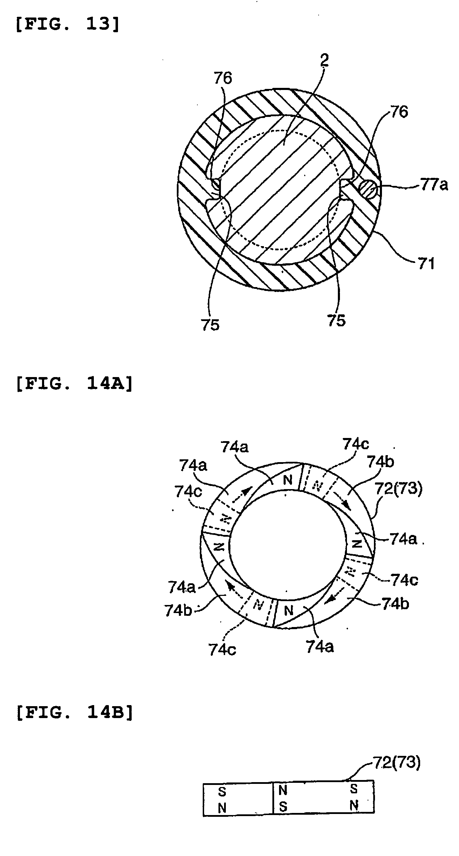

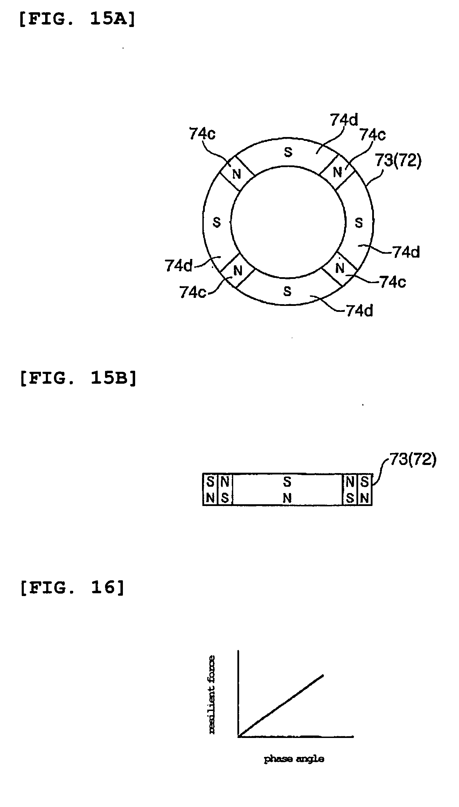

FIG. 9 is a plan view of the power unit of the motor-operated bicycle in the fourth embodiment, depicting essential parts in section. FIG. 10 is an enlarged sectional view of the torque sensor shown in FIG. 9. FIG. 11A, FIG. 11B, FIG. 12A, and FIG. 12B are drawings for explaining two magnetizing patterns of the fixed-side magnet and the movable-side magnet; FIG. 11A and FIG. 12A are side views as seen axially; and FIG. 11B and FIG. 12B, are plan views. FIG. 11A and FIG. 12A show the magnet partially omitted in the circumferential direction. FIG. 13 is a sectional view as seen along the line XIII-XIII in FIG. 10. FIG. 14A, FIG. 14B, FIG. 15A, and FIG. 15B are drawings for explaining another example of magnetization a set of magnets; FIG. 14A and FIG. 15A are side views as seen axially; and FIG. 14B and FIG. 15B, are plan views. FIG. 16 is a graph of relationship between a phase angle and repelling force when the magnet shown in FIGs. 14A and 14B is used in combination with the magnet shown in FIGs. 15A and 15B. In these drawings, the same or similar components as those explained in reference to FIG. 1 through FIG. 8 are provided with the same reference numerals, appropriately omitting detailed explanation.

The torque sensor 3 of the power unit 1 for the motor-operated bicycle in this embodiment includes: a movable-side magnet 72 made of a ring-shaped permanent magnet supported for free axial displacement on the axially central part of the pedal crankshaft 2 through a cylindrical slider 71 (described later), a fixed-side magnet 73 facing the end face of the movable-side magnet 72 on the vehicle body right side (upside in FIG. 9 and FIG. 10), a position detecting magnet 36 located toward the vehicle body left side of the movable-side magnet 72 and supported with the slider 71 together with the movable-side magnet 72, and a position detecting Hall element 37 facing one end face of the position detecting magnet 36 on the vehicle body left side.

As shown in FIG. 11A and FIG. 11B, the movable-side magnet 72 is formed with a circumferential row of a large number of poles. To put it more in detail, the movable-side magnet 72 is axially magnetized with many magnetic poles 74 appearing on both axial end faces. The magnetic poles 74 are formed in a circumferential row with alternate polarity from one pole 74 to another 74. In this embodiment, each magnetic pole 74 is formed as shown in FIG. 11A and FIG. 11B so that the circumferential widths of all the N-pole 74a and the S-pole 74b are approximately the same. Incidentally, the circumferential widths of these magnetic poles 74 may be formed uneven as shown in FIG. 12A and FIG. 12B. The width of the N-pole 74a of the magnetic pole 74 shown in FIG. 12A and FIG. 12B is made constant for all; and the width of the S-pole 74b is made to gradually decrease from the S-pole 74b located on the left in the drawing toward the right.

As shown in FIG. 10, the movable-side magnet 72 magnetized as described above is secured to the slider 71 as the slider 71 is fitted to the inside round surface of the movable-side magnet 72.
The inside round surface of the slider 71 fits for free sliding into the outside round surface of the pedal crankshaft 2. The slider 71, the movable-side magnet 72, the fixed-side magnet 73, the position detecting magnet 36, and the pedal crankshaft 2 are located coaxially.

As shown in FIG. 10 and FIG. 13, the area in which the slider 71 and the pedal crankshaft 2 fit each other is constituted: two raised strips 75 projecting radially inward from the inside round surface of the slider 71 fit for free sliding into the guide grooves 76 of the pedal crankshaft 2. The raised strips 75 are formed to extend parallel to the axis of the slider 71, and located in positions dividing the circumference of the pedal crankshaft 2 into two.

The guide grooves 76 are formed on the outside round surface of the pedal crankshaft 2 to extend parallel to the axis. As the raised strips 75 fit into the guide grooves 76, the slider 71 and the movable-side magnet 72 are supported for free axial sliding on the pedal crankshaft 2. According to this embodiment, the slide guide means as mentioned in the invention is constituted with the raised strips 75 of the slider 71 and the guide grooves 76.

The slider 71 is urged toward the right side of the vehicle body with the compression coil spring 77 connected to one end of the slider 71 on the vehicle body left side and is restricted from moving to the right as pressed from the left side of the vehicle body with the flange portion 2a formed on the outside round surface of the pedal crankshaft 2. The slider 71 moves toward the left side of the vehicle body against resilient force of the compression coil spring 77 from an initial position in which the displacement toward the right is restricted by the flange portion 2a as described above.

The compression coil spring 77 is elastically interposed between the slider 71 and a pressure receiving member 78 attached to one end of the pedal crankshaft 2 on the vehicle body left side. The fore-end 77a of the compression coil spring 77 on the vehicle body right side engages with an engagement hole 71a of the slider 71 formed to extend toward the vehicle body right side (upside in FIG. 10); and the fore-end 77b on the vehicle body left side is formed to extend toward the vehicle body left side and engages with an engagement hole 78a of the pressure receiving member 78.
The compression coil spring 77 used in this embodiment is a general one having the so-called linear spring characteristic. Incidentally, it is also possible to use a spring having the non-linear characteristic as the compression coil spring 77.

The fixed-side magnet 73 opposing the movable-side magnet 72 is made in a ring shape of the same dimension as that of the movable-side magnet 72, and provided with magnetic poles 74 in the same magnetizing pattern as that of the movable-side magnet 72 as shown in FIG. 11A, FIG. 11B, FIG. 12A, and FIG. 12B. In other words, a large number of N-poles 74a and S-poles 74b are also formed on the axial end face of the fixed-side magnet 73 alternately in a circumferential row.

The fixed-side magnet 73 is fixed to and supported with one end of the sprocket supporting boss 23 on the vehicle body left side and located coaxially with the pedal crankshaft 2. The fixed-side magnet 73 is also attached to the sprocket supporting boss 23 so that a specified gap is present between itself and the movable-side magnet 72.

The circumferential positions of the fixed-side magnet 73 and the movable-side magnet 72 are set to the positions in which the repelling force due to the magnetic forces of the fixed-side magnet 73 and the movable-side magnet 72 is in balance with the resilient force of the compression coil spring 77 in the state of the pedal crankshaft 2 producing no rotary displacement relatively to the human power driven sprocket 24. Further, the movable-side magnet 72 and the fixed-side magnet 73 are constituted so that the repelling force acting on both of the magnets increases as the movable-side magnet 72 rotates clockwise as seen from the right of the vehicle body relatively to the fixed-side magnet 73.

In other words, with this torque sensor 3, when the pedal crankshaft 2 rotates in the forward rotary direction relatively to the human power driven sprocket 24 due to increase in the pedaling force (or when a rotary phase difference is produced) from the state of the pedal crankshaft 2 and the human power driven sprocket 24 rotating together (initial state), the repelling force exceeds the resilient force of the compression coil spring 77. Therefore, with this torque sensor 3, the movable-side magnet 72 moves toward the left side of the vehicle body against the resilient force of the compression coil spring 77 due to the repelling force.

The position detecting magnet 36 of this embodiment is formed in a ring shape of the same dimension as that of both the movable-side magnet 72 and the fixed-side magnet 73, and secured in a position adjacent to the movable-side magnet 72 on the vehicle body left side, coaxially with the pedal crankshaft 2. The magnetizing pattern of the position detecting magnet 36 is arranged as that of the position detecting magnet 36 shown in the first embodiment (FIG. 6) with N-poles and S-poles in an axial row. Incidentally, in the torque sensor 3 of this embodiment, the position detecting magnet 36 may be formed integrally with the movable-side magnet 72. To employ this constitution, the constitution of the magnetic poles is made different between one end of the movable-side magnet 72 on the vehicle body right side and the other end on the vehicle body left side. In this case, the one end of the movable-side magnet 72 on the vehicle body right side is magnetized to be multi-polar in the circumferential direction, and the other end on the vehicle body left side is magnetized so that, for example, an N-pole is formed on the shaft end face, and that an S-pole is formed on the outside round surface.

The position detecting Hall element 37 facing one end of the position detecting magnet 36 on the vehicle body left side is located as axially spaced by a specified distance from the position detecting magnet 36, and supported and secured through a bracket (not shown) on the housing 5 of the power unit 1.
The Hall element 37 used in this embodiment is the one with its output changing in the so-called analog manner corresponding to the distance between itself and the position detecting magnet 36 (corresponding to the magnetic flux density), and is constituted to send detection signals representing the magnitude of the magnetic flux to the controller 16.

With the torque sensor 3 of this embodiment, if the pedal crankshaft 2 rotates forward relatively to the human power driven sprocket 24 as the rider's pedaling force increases, a state in which the repelling force between the movable-side magnet 72 and the fixed-side magnet 73 and the resilient force of the compression spring 77 are in balance changes to a state in which the repelling force exceeds the resilient force. As the repelling force exceeds the resilient force of the compression spring 77, the movable-side magnet 72 moves together with the position detecting magnet 36 toward the vehicle body left side.

At this time, the Hall element 37 detects the distance between itself and the position detecting magnet 36, and the controller 16 calculates the magnitude of the torque (pedaling force) and causes the motor 4 to increase its output in approximate proportion to the pedaling force. On the other hand, when the pedaling force disappears and no rotary displacement is present between the pedal crankshaft 2 and the human power driven sprocket 24, movable-side magnet 72 is pushed back with the elastic force of the compression coil spring 77 to the initial position. As a result, the controller 16 stops the electric power supply to the motor 4.

Therefore, with the torque sensor 3 of this embodiment, increase or decrease in the pedaling force is detected, like switching on or off, when a change of state occurs between one in which the magnetic repelling force occurring between the movable-side magnet 72 and the fixed-side magnet 73 is in balance with the resilient force of the compression coil spring 77 and the other in which the repelling force exceeds the resilient force. Therefore, with this torque sensor 3, it is possible to detect without fail when a magnitude of torque that will cause rotary displacement of the pedal crankshaft 2 relative to the human power driven sprocket 24 is applied to the pedal crankshaft 2.

The torque sensor 3 of this embodiment is constituted so that the repelling force occurring between the movable-side magnet 72 and the fixed-side magnet 73 is in balance with the resilient force of the compression coil spring 77 when the movable-side magnet 72 is in the initial position, and that the balance is lost when the rotary phase difference is produced between the pedal crankshaft 2 and the human power driven sprocket 24. Therefore, with this torque sensor 3, because the increase in the repelling force and the displacement of the movable-side magnet 72 occur almost simultaneously, it is possible to displace the movable-side magnet 72 with prompt response when the rotary phase difference is produced. Therefore, it is possible to accurately detect the magnitude of the torque, applied to the pedal crankshaft 2, of such a magnitude as to produce rotary displacement relative to the human power driven sprocket 24.

In the torque sensor 3 of this embodiment, it is possible by using a compression coil spring having the non-linear characteristic as the compression coil spring 77 to displace the movable-side magnet 72 in approximate proportion to the change in the rotary displacement between the pedal crankshaft 2 and the human power driven sprocket 24. Employing such a constitution makes it possible to more accurately detect the magnitude of the torque (pedaling force) applied to the pedal crankshaft 2 to cause its rotary displacement.

The movable-side magnet 72 and the fixed-side magnet 73 of the torque sensor 3 of this embodiment are magnetized axially, and the magnetic poles 74 are formed on both of the axial end faces. Thus, because it is possible to cause attracting or repelling force occurring between these magnets 72 and 73 to act axially, it is possible to utilize the magnetic force efficiently. With the torque sensor 3 of this embodiment, it is possible by forming the magnetizing patterns of the movable-side magnet 72 and the fixed-side magnet 73 at uneven pitches as shown in FIG. 12A and FIG. 12B to change the magnitude of the attracting or repelling force so as to correspond to the rotary displacement amount. Therefore, employing this constitution makes it possible to all the more smoothly and correctly displace the movable-side magnet 72 that is axially movable.

The torque sensor 3 of this embodiment is constituted that, in the initial position, the repelling force occurring between the movable-side magnet 72 and the fixed-side magnet 73 is in balance with the resilient force of the compression coil spring 77. However, the torque sensor (rotation detector) of the invention may employ a constitution in which the attracting force is caused to occur between the movable-side magnet 72 and the fixed-side magnet 73 so that the attracting force is in balance with the resilient force of the spring in the initial position. In that case, it is possible to employ either a constitution using a tension spring for pulling the movable-side magnet 72 in the direction opposite from the fixed-side magnet 73 or a constitution using a compression coil spring for pushing the movable-side magnet 72 opposite from the fixed-side magnet 73 from the side of the fixed-side magnet 73. In this case, it is constituted that the attracting force decreases as the rotary phase difference is produced between the pedal crankshaft 2 and the human power driven sprocket 24.

When the above-described constitution is employed, the attracting force decreases with the increase in the rotary phase difference, and the movable-side magnet 72 is moved by the resilient force of the spring toward the vehicle body left side. Therefore, there is a risk that the movable-side magnet 72 cannot be returned accurately to the initial position by the attracting force when the rotary phase difference disappears. Therefore, when the above constitution is employed, it is preferable to provide a stopper for restricting the axial displacement amount of the movable-side magnet 72, so that the movable-side magnet 72 is pulled back by the attracting force to the initial position when the rotary phase difference disappears.

When the constitution of this embodiment is employed, it is possible to magnetize one of the movable-side magnet 72 and the fixed-side magnet 73 in the pattern shown in FIG. 14A and FIG. 14B; and the other of them, as shown in FIG. 15A and FIG. 15B.
Also the magnets shown in these drawings are magnetized in the axial direction. The N-pole 74a and the S-pole 74b of the magnet shown in FIG. 14A and FIG. 14B are respectively formed in positions evenly dividing the annular magnet into four. Each N-pole 47a is formed with its radial width decreasing toward one circumferential direction (counterclockwise in FIG. 14A). In contrast, each S-pole 74b is formed with its radial width increasing toward the direction.
Also the magnetic poles of the magnet shown in FIG. 15A and FIG. 15B are formed in positions evenly dividing the annular magnet into four. The N-pole 74c of the magnet shown in FIG. 15A and FIG. 15B is formed smaller in circumferential width than the S-pole 74d.

The movable-side magnet 72 or the fixed-side magnet 73 with the magnetic poles 74 formed as described above is used with one N-pole and another N-pole (N-pole 74a and N-pole 74c) axially facing each other and located coaxially. In FIG. 14, the N-pole 74c of the fixed-side magnet 73 facing the N-pole 74a of the movable-side magnet 72 is indicated in broken lines.

With the movable-side magnet 72 and the fixed-side magnet 73 magnetized as shown in FIG. 14A, FIG. 14B, FIG. 15A, and FIG. 15B, when the magnet shown in FIG. 15A and FIG. 15B rotates clockwise relatively to the magnet shown in FIGs. 14A and 14B, as indicated with broken line arrows in FIG. 14A the overlapping area of the mutually facing N-poles (N-pole 74a and N-pole 74c) as seen in the axial direction increases linearly corresponding to the phase angle. Therefore, when this constitution is employed, the repelling force increases in proportion to the phase angle between the movable-side magnet 72 and the fixed-side magnet 73 as shown in FIG. 16. Thus, it is possible to obtain the output in proportion to the pedaling force.

### (Fifth Embodiment)

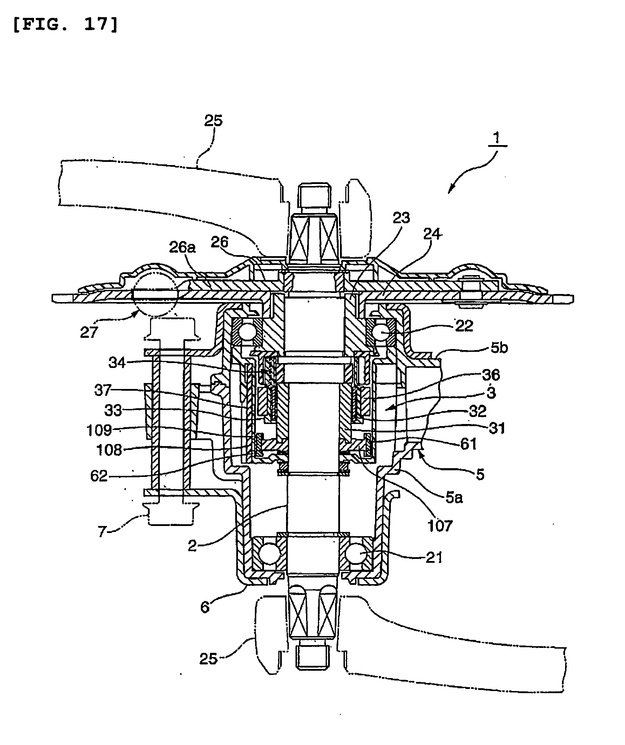

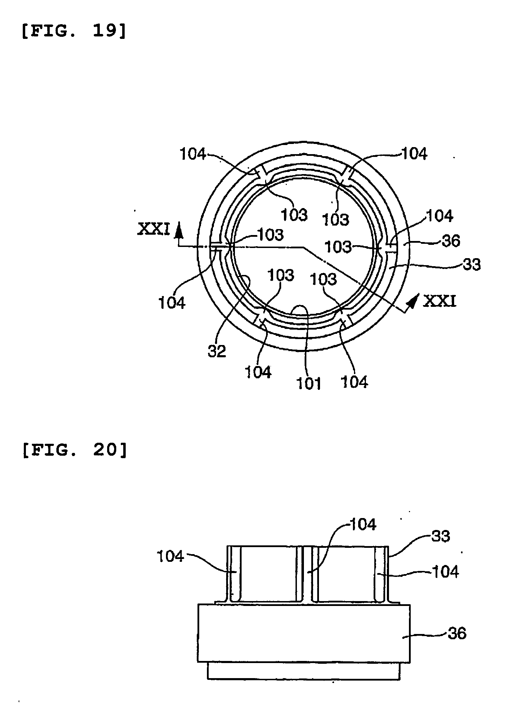

The torque sensor explained in the first embodiment may be formed as shown in FIG. 17 through FIG. 24. In these figures, the same or similar components as those explained in reference to FIG. 1 through FIG. 16 are provided with the same reference numerals, appropriately omitting detailed explanation.

The torque sensor 3 of the power unit 1 for the motor-operated bicycle shown in FIG. 17 is made compact in comparison with the torque sensor 3 shown in FIG. 1 and FIG. 2, and functionally improved as described later. The slider 33 used in this torque sensor 3 of this embodiment is made shorter in axial length than the slider shown in the first embodiment. A position detecting magnet 36 is secured to the outside round surface of the slider 33. In other words, this torque sensor 3 is reduced in axial dimension by providing the position detecting magnet 36 on the radial outside of the movable-side magnet 32.

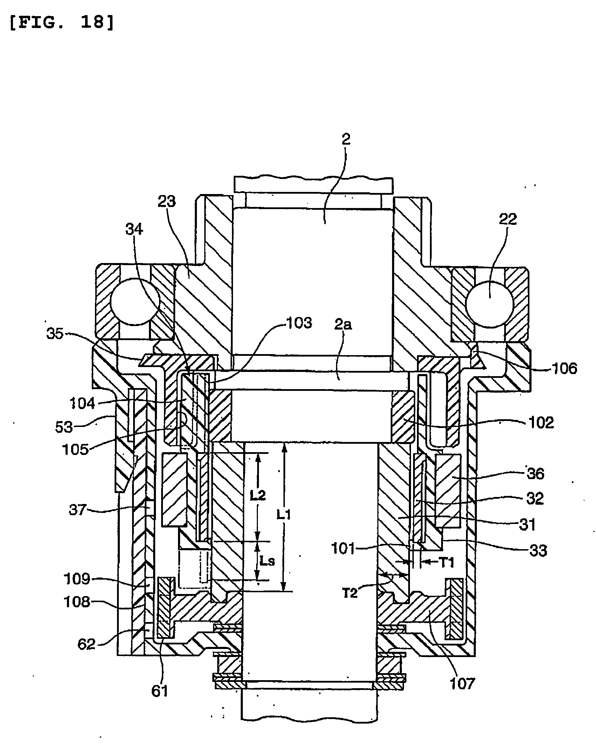

Although the position detecting magnet 36 is located coaxially with both the fixed-side magnet 31 and the movable-side magnet 32 as described above The torque sensor 3, is prevented from becoming radially large-sized by forming the fixed-side magnet 31 and the movable-side magnet 32 in necessity minimum of thickness. The fixed-side magnet 31 is press-fitted and secured to the pedal crankshaft 2. The axial length L1 of the fixed-side magnet 31 is set as shown in FIG. 18 to be greater than the total of the axial length L2 of the movable-side magnet 32 and its axial travel distance Ls.

The movable-side magnet 32 is made in such a minimum size that makes it possible to displace the slider 33 and the position detecting magnet 36 by magnetic force. The thickness T1 of the movable-side magnet 32 is set as shown in FIG. 18 smaller than the thickness T2 of the fixed-side magnet 31.

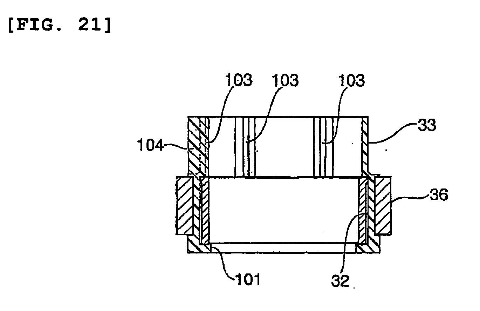

As the slider 33 of this embodiment is made short in axial length as described above, its one end on the vehicle body left side is supported as shown in FIG. 18 for free rotation and free axial sliding with the fixed-side magnet 31. The inside round surface of one end of the slider 33 on the vehicle body left side is provided as shown in FIG. 21 with raised strips 101 extending in the circumferential direction and raised toward the axis. The dimension inside the raised strips 101 is set so that the strips 101 are supported on the fixed-side magnet 31.

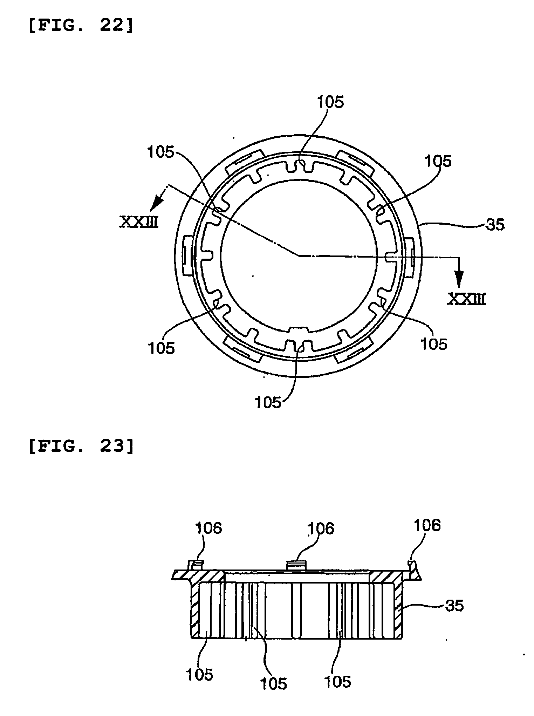

On the other hand, the inside round surface of the other end of the slider 33 on the vehicle body right side is provided as shown in FIG. 18 and FIG. 21, with a plural number of raised strips 103 of a mound-shaped cross section in contact for free rotation and free axial sliding with a ring 102 provided on the pedal crankshaft 2. The ring 102 is made in an annular shape, of plastic material of low coefficient of friction, and secured to the pedal crankshaft 2. The raised strips 103 are formed to extend along the axis of the slider 33.
The outside round surface of one end of the slider 33 on the vehicle body right side is provided as shown in FIG. 18 through FIG. 20, with a plural number of ribs 104 extending along the axis of the slider 33. These ribs 104 are formed to fit for free motion in grooves 105 (See FIG. 22 and FIG. 23) formed in the inside round surface of the slide guide ring 35.

In other words, the slide guide means 34 of this embodiment employs the constitution restricting the motion of the slider 33 to the axial direction only by the engagement of the ribs 104 the grooves 105.
The slide guide ring 35 of this embodiment as shown in FIG. 18 and FIG. 23, is secured to the sprocket supporting boss 23 by engage-stopping the claws 106 projecting from the end of the slide guide ring 35 on the vehicle body right side with the boss 23.

In the torque sensor 3 of this embodiment, as shown in FIG. 17 and FIG. 18, a supporting member 107 is provided on one end of the fixed-side magnet 31 on the vehicle body left side. The supporting member 107 for supporting the rotation detecting magnet 61 is formed in a disk shape, and fitted and secured on the pedal crankshaft 2. The supporting member 107 also engages with one end of the fixed-side magnet 31, with its rotary position restricted from changing relatively to the fixed-side magnet 31.

The rotation detecting magnet 61 is made in a cylindrical shape and secured to the outside round surface of the supporting member 107. The rotation detecting magnet 61 of this embodiment employs a constitution that vanes bet one end on the vehicle body left side and the other end on the vehicle body right side. The end of the rotation detecting magnet 61 on the vehicle body left side is magnetized, like the rotation detecting magnet 61 shown in FIG. 6, with a large number of N-poles and S-poles in alternate circumferential succession. The other end of the rotation detecting magnet 61 on the vehicle body right side is magnetized with one N-pole aligned one S-pole in circumferential direction. The magnetic flux of one end of the rotation detecting magnet 61 on the vehicle body left side is detected by the rotation detecting Hall element 62 (See FIG. 18). The magnetic flux of the other end of the rotation detecting magnet 61 on the vehicle body right side is detected by a rotation detecting Hall element 109 provided on a circuit board 108, which also carries the rotation detecting Hall element 62.

In other words, this embodiment makes it possible to detect the revolution of the pedal crankshaft 7 by the rotation detecting Hall element 62 and further makes it possible to detect the rotary position of the pedal crankshaft 7 by the rotation detecting Hall element 109. Because it is possible to determine the position of the pedal (not shown) from the rotary position of the pedal crankshaft 7, the power unit 1 for the motor-operated bicycle using this torque sensor 3 can control the magnitude of assisting power corresponding to the pedal position. In this embodiment, the rotation detecting sensor described in Claim 7 is constituted with the rotation detecting Hall element 62 and the rotation detecting Hall element 109.

The circuit board 108 carrying the Hall elements 62 and 109 also carries the Hall element 37 (position detecting sensor) for detecting the magnetic field of the position detecting magnet 36. In other words, a single circuit board 108 carries the three Hall elements 37, 62, and 109. Because employing this constitution makes it possible to make the space for providing the circuit board 108 as small as possible, it is possible to make the torque sensor 3 compact while employing the above constitution using the three Hall elements.

Constituting the torque sensor 3 as shown in the above embodiment still makes it possible to set a great skew angle as shown in the graph of FIG. 24. In FIG. 24, the performance of the torque sensor in this embodiment is indicated with a solid curve, and the performance of the conventional mechanical torque sensor using the cam and the cam follower is indicated with a broken curve. Incidentally, FIG. 24 shows an example in which moving parts are made of a material of frictional coefficient p of 0.4.

As seen from the graph, when the skew angle exceeds 40 degrees the conventional torque sensor cannot be used because of high surface pressure due to friction. With the torque sensor 3 of this embodiment, however, the surface pressure does not rise until the skew angle exceeds 60 degrees.
Incidentally, the term surface pressure as used herein for the torque sensor 3 of this embodiment means the pressure on the contacting parts of the ribs 104 on the slider 33 and the grooves 105 in the slide guide ring 35.

Therefore, the torque sensor 3 of this embodiment also provides the same effect as that of the first embodiment. In other words, also the torque sensor 3 of this embodiment, it is possible to reduce the radial size of the torque sensor 3 without giving unusual feeling to the rider or lowering the accuracy in detecting the pedaling force.
Moreover, because the position detecting magnet 36 is concentric with the fixed-side magnet 31 and the movable-side magnet 32, the torque sensor 3 is also downsized in the axial direction.
Furthermore, because the three Hall elements 37, 62, and 109 are provided on the single circuit board 108, the torque sensor 3 is made all the more compact.

The torque sensor 3 in the first to fifth embodiments described above, transmits the pedaling force from the pedal crankshaft 2 through the driving lever 26 and the connecting mechanism 27 to the human power driven sprocket 24. Thus, because the rotation detector used in this torque sensor 3 is located outside the driving power transmitting system for driving the rear wheel, the components of the rotation detector may be formed with minimum necessary rigidity for supporting the resilient force of the compression coil spring 77 and the magnetic force. Therefore, the rotation detector is made compact and may be positioned to prevent mud water or dust from finding its way into the power unit 1 while downsizing the power unit 1 for the motor-operated bicycle.

Each of the torque sensors 3 shown in the first through fifth embodiments above is to axially move either the fixed-side magnet 31, 37 or the movable-side magnet 32, 37 by magnetic force. Therefore, in comparison with employing the constitution such as mechanical torque cam for converting rotation into axial reciprocating motion, a smaller force suffices for operation. Therefore, vibration and minute shocks produced when the torque sensor 3 shown in the above embodiments detects torque are not transmitted to the rider' s feet. Thus, it is possible to improve the riding comfort of the motor-operated bicycle.

The above-described first through fifth embodiments are shown as examples in which the torque sensor 3 of the power unit for the motor-operated bicycle is constituted using the rotation detector of the invention. However, the application of the rotation detector of the invention is not limited to such a torque sensor 3 but may be made to any device as long as it detects relative rotary displacement amount between two rotary bodies. For example, it is possible to constitute a throttle position sensor for detecting the throttle opening of motorcycles using the rotation detector of the invention.

### Industrial Applicability

The rotation sensor according to the invention makes it possible to constitute a torque sensor for detecting the pedaling force on motor-operated bicycles, a throttle position sensor for detecting the throttle opening of motorcycles, and so on.

## Claims

1. A rotation detector comprising:
a first and a second rotary bodies located on a common axis with one rotary body rotatable relatively to the other,
a slider located coaxially with one of the first and second rotary bodies with its rotation relative to the one rotary body restricted while with its axial displacement permitted as it is connected to the one rotary body through a slide guide means,
a movable-side magnet fixed coaxially on the slider, and
a fixed-side magnet fixed coaxially on the other rotary body with its axial displacement restricted,
wherein these movable-side magnet and fixed-side magnet are magnetized so that magnetic force axially working on both of the magnets changes when the rotary position of one magnet relative to the rotary position of the other magnet changes, and
further comprising a detecting means for detecting the amount of rotary displacement between the first and second rotary bodies from the axial position of the slider.

2. A torque sensor using the rotation detector of Claim 1, wherein
the first and second rotary bodies are interconnected through an elastic member, and interposed in a power transmission system so that power is transmitted from one of these rotary bodies to the other, and
the detecting means detects the magnitude of the torque transmitted between the first and second rotary bodies from the axial position of the slider.

3. The torque sensor of Claim 2, wherein
one of the movable-side magnet and the fixed-side magnet is play-fitted into a hollow part of the other magnet,
opposing faces of the movable-side magnet and the fixed-side magnet are formed with a plural number of magnetic poles in circumferential succession and extending axially from one end to the other of the magnets, and
these magnetic poles are different in polarity from one pole to another in the circumferential direction and extend in a spiral pattern centered on the axis of the first and second rotary bodies.

4. The torque sensor of Claim 3, wherein
the movable-side magnet and the fixed-side magnet are formed respectively in a cylindrical shape, and
thickness of the movable-side magnet is formed equal to or smaller than that of the fixed-side magnet.

5. The torque sensor of Claim 3, wherein
the axial length of the fixed-side magnet is formed equal to or greater than the total of the axial length of the movable-side magnet and its permissible traveling length.

6. The torque sensor of Claim 3, wherein
the first rotary body is constituted with a pedal crankshaft of a motor-operated bicycle,
the fixed-side magnet is secured to the outside round surface of the pedal crankshaft,
the second rotary body is disposed radially outside the pedal crankshaft,
the slider is connected for free motion through a slide guide means to the second rotary body,
the detecting means comprises a position detecting magnet secured to the slider and a position detecting sensor supported on the vehicle body frame side of the motor-operated bicycle to detect the position detecting magnet, and
the position detecting magnet is disposed radially outside the movable-side magnet.

7. The torque sensor of Claim 6, wherein
a rotation detecting magnet is provided on the pedal crankshaft, and
a rotation detecting sensor for detecting the magnetic flux of the rotation detecting magnet is provided on a circuit board commonly used for providing the position detecting sensor.

8. The torque sensor of Claim 2, wherein
the axial end faces of the movable-side magnet and the fixed-side magnet oppose each other, and
the magnetic poles of these magnets are formed with a large number of N-poles and S-poles located alternately in a rotary direction row.

9. The torque sensor of Claim 8,
provided with an urging means to urge the movable-side magnet in the direction opposite from the direction in which magnetic force acts on the movable-side magnet and the fixed-side magnet, wherein
the magnetic force and the urging force of the urging means are in balance in the state of the first and second rotary bodies rotating in phase, and the balance between the magnetic force and the urging force is lost when the rotary position of one magnet changes relatively to the rotary position of the other magnet.

10. The torque sensor of Claim 9, wherein
the urging means is constituted with a spring exhibiting a non-linear spring characteristic.
